# EUROPEAN PATENT SPECIFICATION

(11) **EP 4 493 988 B1**
(45) Date of publication and mention of the grant of the patent: **16.07.2025**
(21) Application number: 22716183.3
(22) Date of filing: 17.03.2022
(51) Int. Cl.: G06F 3/01, G06F 3/04886, B60K 35/10, B60K 35/22, B60K 35/25, G06F 3/04842

(54) **CONTROL OF A HAPTIC TOUCHSCREEN BY EYE GAZE**
STEUERUNG EINES HAPTIC TOUCHSCREEN PER BLICK
CONTRÔLE D'UN ÉCRAN TACTILE HAPTIQUE PAR REGARD DES YEUX

(43) Date of publication of application: 22.01.2025
(73) Proprietor: Telefonaktiebolaget LM Ericsson (publ), 164 83 Stockholm (SE)
(72) Inventor: ÖKVIST, Peter, 973 41 LULEÅ (SE); KRISTENSSON, Andreas, 247 35 SÖDRA SANDBY (SE); ARNGREN, Tommy, 954 42 SÖDRA SUNDERBYN (SE)
(74) Representative: Ericsson
(86) International application number: PCT/EP2022/056908
(87) International publication number: WO 2023/174538

(56) References cited:
- US-A1- 2014 256 438
- US-A1- 2016 187 976

## Description

### Technical field

The invention relates to a computing device for controlling a haptic touchscreen, a method of controlling a haptic touchscreen, a corresponding computer program, a corresponding computer-readable data carrier, and a corresponding data carrier signal.

### Background

Modern cars and other vehicles are frequently provided with touchscreens which can be used for controlling at least part of a car's functionality, such as heater settings, audio playout, route planning, and the like. Whereas some manufacturers mix touchscreen-based user interfaces (Uls) and conventional, physical buttons, sliders, levers, etc, an increasing use of touchscreen-based Uls in vehicles is expected.

A problem which arises with the emerging use of touchscreen-based Uls in vehicles is the challenge for the driver to simultaneously maintain attention to the traffic and safely maneuver the car, while operating the touchscreen. This is aggravated by the fact that modern cars are provided with more and more functionality, leading to increasingly complex Uls with many virtual buttons, knobs, sliders, and other UI elements. In addition, in contrast to physical buttons, the spatial arrangement of the UI elements displayed on the touchscreen, i.e., the virtual buttons, sliders, etc, is dynamic and changes depending on context, which makes it more difficult for the driver to locate the UI element which she/he intends to touch.

Gesture control has been offered as a means of touchless interaction but is typically limited to a set of few gestures (see, e.g., https://www.digitaltrends.com/cars/2016-bmw-7-series-gesture-control-pictures-video-news/, retrieved on 16 March 2022).

Haptic technology can be used for providing the sensation of touch when interacting with a touchscreen, in an attempt to mimic the sensation when touching a physical button. Haptic feedback can create an experience of touch by applying forces, vibrations, or motions, to the object touching the touchscreen, such as the finger of the driver. Thereby, finding the correct button on an in-vehicle touchscreen, without looking at the touchscreen while driving, is simplified (see, e.g., https://www.bosch-mobility-solutions.com/en/solutions/infotainment/display-and-interaction-systems/, retrieved on 16 March 2022, https://www.ultraleap.com/enterprise/automotive/, retrieved on 16 March 2022).

However, due to the steadily increasing complexity of in-vehicle touchscreen-based Uls, finding the intended button or other UI element even with haptic feedback is a challenge, as it attracts the driver's attention and prevents the driver from keeping both hands at the steering wheel while operating the touchscreen.

US 2014/0256438 A1 discloses solutions to provide haptic sensations as a function of eye gaze, e.g., a system which includes a detector configured to determine a direction of an eye gaze of a user of the system, a processor configured to generate a signal representative of a haptic effect based on the direction of the eye gaze, and a haptic output device configured to receive the signal from the processor and output the haptic effect to the user.

US 2016/0187976 A1 discloses an eye-tracking device configured to track a user's eye gaze while looking at media content comprising an image, and a processor configured to execute one or more computer program modules, including a content determination module that, when executed by the processor, analyzes the media content to identify the image, an eye gaze determination module that, when executed by the processor, determines a gaze location of the user's eye gaze while looking at the image, and an event determination module that, when executed by the processor, determines an event to trigger based on the identification of the image and the gaze location.

### Summary

It is an object of the invention to provide an improved alternative to the above techniques and prior art.

More specifically, it is an object of the invention to provide improved touchscreen-based Uls. In particular, it is an object of the invention to provide improved touchscreen-based Uls which diminish the time the user is required to look at the touchscreen to locate a UI element which the user intends to touch.

These and other objects of the invention are achieved by means of different aspects of the invention, as defined by the independent claims. Embodiments of the invention are characterized by the dependent claims.

According to a first aspect of the invention, a computing device for controlling a haptic touchscreen is provided. The computing device comprises processing circuitry which causes the computing device to become operative to display a plurality of UI elements on the touchscreen. The computing devices becomes further operative to acquire information pertaining to a point of gaze of a user gazing at the touchscreen. The information pertaining to the point of gaze is acquired from a gaze detector. The computing devices becomes further operative to select at least one of the displayed UI elements based on the point of gaze. The computing devices becomes further operative to control the touchscreen to render the selected UI elements haptically distinguishably from the other UI elements.

According to a second aspect of the invention, a method of controlling a haptic touchscreen is provided. The method is performed by a computing device and comprises displaying a plurality of UI elements on the touchscreen. The method further comprises acquiring information pertaining to a point of gaze of a user gazing at the touchscreen. The information pertaining to the point of gaze is acquired from a gaze detector. The method further comprises selecting at least one of the displayed UI elements based on the point of gaze. The method further comprises controlling the touchscreen to render the selected UI elements haptically distinguishably from the other UI elements.

According to a third aspect of the invention, a computer program is provided. The computer program comprises instructions which, when the computer program is executed by a computing device, causes the computing device to carry out the method according to an embodiment of the second aspect of the invention.

According to a fourth aspect of the invention, a computer-readable data carrier is provided. The data carrier has stored thereon the computer program according to an embodiment of the third aspect of the invention.

According to a fifth aspect of the invention, a data carrier signal is provided. The data carrier signal carries the computer program according to an embodiment of the third aspect of the invention.

In the present context, "haptically distinguishable" means that the selected UI elements on the one hand, and the other (not selected) UI elements on the other hand, are rendered with a haptic contrast relative to each other, i.e., with respective haptic properties which are sufficiently different such that the user touching the UI elements (e.g., using his/her finger) can sense a difference between the selected UI elements and the other UI elements.

The invention makes use of an understanding that UI elements which the user is gazing at can be selected to be "haptically highlighted" to facilitate selecting an intended UI element by the user, i.e., a UI element which the user intends to touch or actuate, without gazing at the touchscreen for an extended duration of time. In particular for in-vehicle touchscreens, reducing the time during which the driver gazes at the touchscreen, rather than watching the traffic around the vehicle, is advantageous since the safety of the driver, the vehicle, and its surroundings, are improved.

Even though advantages of the invention have in some cases been described with reference to embodiments of the first aspect of the invention, corresponding reasoning applies to embodiments of other aspects of the invention.

Further objectives of, features of, and advantages with, the invention will become apparent when studying the following detailed disclosure, the drawings and the appended claims. Those skilled in the art realize that different features of the invention can be combined to create embodiments other than those described in the following.

### Brief description of the drawings

The above, as well as additional objects, features and advantages of the invention, will be better understood through the following illustrative and non-limiting detailed description of embodiments of the invention, with reference to the appended drawings, in which:
Fig. 1 illustrates a driver operating an in-vehicle touchscreen, in accordance with embodiments of the invention.
Fig. 2 shows a computing device for controlling a haptic touchscreen, in accordance with embodiments of the invention.
Figs. 3A-3D Exemplify selecting UI elements for haptically distinguishably rendering, in accordance with embodiments of the invention.
Fig. 4 illustrates correction of a touch input by the user, in accordance with embodiments of the invention.
Fig. 5 shows a method of controlling a haptic touchscreen, in accordance with embodiments of the invention.

All the figures are schematic, not necessarily to scale, and generally only show parts which are necessary in order to elucidate the invention, wherein other parts may be omitted or merely suggested.

### Detailed description

The invention will now be described more fully herein after with reference to the accompanying drawings, in which certain embodiments of the invention are shown. This invention may, however, be embodied in many different forms and should not be construed as limited to the embodiments set forth herein. Rather, these embodiments are provided by way of example so that this disclosure will be thorough and complete, and will fully convey the scope of the invention to those skilled in the art.

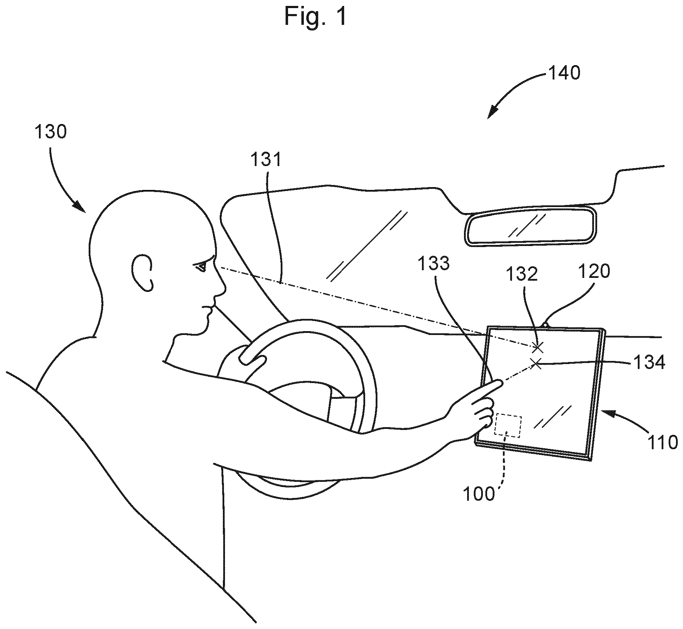

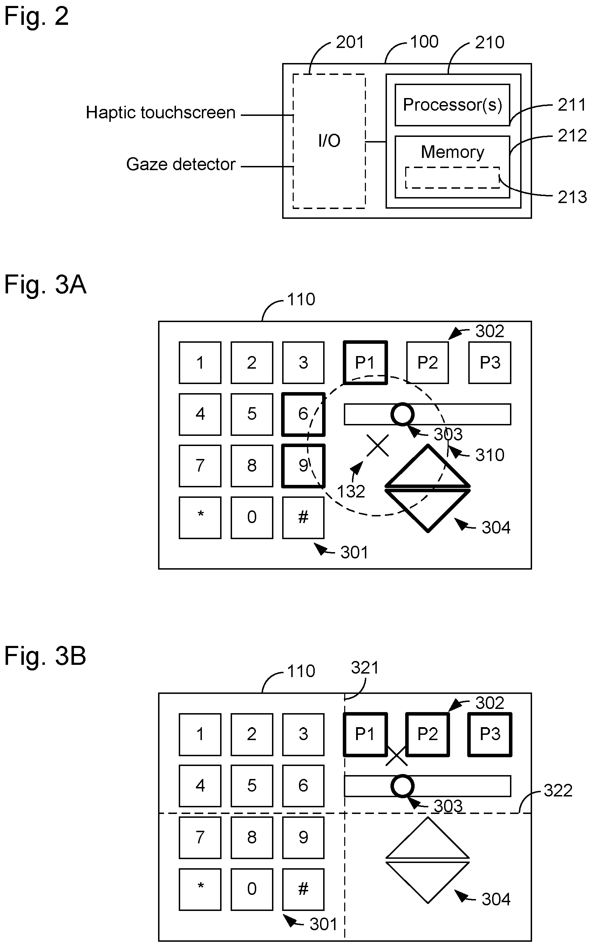

Fig. 1 illustrates a driver 130 of a car 140 operating an in-vehicle touchscreen 110, in accordance with embodiments of the invention. The touchscreen 110 may, e.g., provide the UI of a car infotainment system. The touchscreen 110 is a haptic touchscreen and is controlled by a computing device 100 for controlling the haptic touchscreen 110, which is schematically illustrated in Fig. 2 and described in more detail below.

The haptic touchscreen 110 may be a touchscreen with integrated haptic capabilities. For instance, the haptic touchscreen may be based on Electroactive Polymers (EAPs), which are deposited in a multilayer structure on top of a (non-haptic) touchscreen to provide spatially resolved actuation by application of an electric field (see, e.g., US 2002/0054060 A1, US 2011/0128239 A1). Thereby, a change in texture, vibrations, forces, or motion, can be rendered for sensing by an object interacting with, i.e., touching, the touchscreen 110, such as the finger 133 of the driver 130. The haptic touchscreen 110 may alternatively be based on other known technologies for haptic screen actuation, such as piezoelectric actuators, shape-shifting materials, linear resonant actuators, UV shape polymers, etc.

The haptic touchscreen 110 may alternatively comprise a conventional, non-haptic touchscreen, i.e., a touch-sensitive display, in combination with a haptic actuator which may be provided separately from the (non-haptic) touchscreen. For instance, the haptic actuator may be based on ultrasonic haptic technology which enables creating a haptic sensation mid-air. Ultrasonic haptic technology utilizes ultrasonic focusing technology and modulation to apply desired tactile sensory stimuli to a certain point in mid-air, by controlling the phase and intensity of ultrasound pulses which are emitted by a set of ultrasound transducers. Such ultrasonic haptic actuator may be provided adjacent to the touchscreen 110, e.g., on top of the touchscreen 110 so as to provide a haptic sensation to the finger 133 of the driver 130 when approaching, being close to, or touching, the touchscreen 110. As an example, Ultraleap offers a mid-air haptics UI for automotive applications (https://www.ultraleap.com/enterprise/automotive/, retrieved on retrieved on 16 March 2022).

With reference to Fig. 2, the computing device 100 for controlling a haptic touchscreen 110 (in the following referred to as "touchscreen") comprises processing circuitry 210. The processing circuitry 210 may comprise one or more processors 211, such as Central Processing Units (CPUs), microprocessors, application processors, application-specific processors, Graphics Processing Units (GPUs), and Digital Signal Processors (DSPs) including image processors, or a combination thereof, and a memory 212 comprising a computer program 213 comprising instructions. When executed by the processor(s) 211, the instructions cause the computing device 100 to become operative in accordance with embodiments of the invention described herein. The memory 212 may, e.g., be a Random-Access Memory (RAM), a Read-Only Memory (ROM), a Flash memory, or the like. The computer program 213 may be downloaded to the memory 212 by means of a network interface circuitry (not shown in Fig. 2), as a data carrier signal carrying the computer program 213. The network interface circuitry may comprise one or more of a cellular modem (e.g., GSM, UMTS, LTE, 5G, or higher generation), a WLAN/Wi-Fi modem, a Bluetooth modem, an Ethernet interface, an optical interface, or the like, for exchanging data between the computing device 100 and other computing devices, communications devices, a radio-access network, and/or the Internet. The processing circuitry 210 may alternatively or additionally comprise one or more Application-Specific Integrated Circuits (ASICs), Field-Programmable Gate Arrays (FPGAs), or the like, which are operative to cause the computing device 100 to become operative in accordance with embodiments of the invention described herein.

The computing device 100 may further comprise one or more interface circuitries 201 ("I/O" in Fig. 2) for communicating with the haptic touchscreen 110 and the gaze detector 120, and optionally other external circuits or devices. The one or more interface circuitries 201 may be based on Universal Serial Bus (USB), the Vehicle Communication Interface (VCI), or the like.

More specifically, the processing circuitry 210 causes the computing device 100 to become operative to display a plurality of UI elements, aka virtual UI elements, on the touchscreen 110. In particular, this may be UI elements which the driver 130 (or a user of the computing device 100 in general) can interact with using a finger 133, a stylus pen, or a similar object, by means of touching, pressing, clicking, sliding, dragging, or the like. Typically, such UI elements can be used for controlling an operation or operations of the computing device 100 or another device or apparatus which is operatively connected to, and controlled by, the computing device 100. The operation or operations may relate to settings or configuration of a device or an apparatus, such as a smartphone, a tablet, a computer, a household appliance, or a vehicle 140 such as a car. For example, the UI elements may be used for controlling a media playout device such as a radio, television, or music player, a heater or air condition, lights, etc. Each UI element may, e.g., be any one of a button, a knob, a dial, a slider, a toggle switch, a wheel, or the like.

The computing device 100 is further operative to acquire information pertaining to a point of gaze 132 of a user, e.g., the driver 130, gazing at the touchscreen 110. The point of gaze 132 is the location on the touchscreen 110 where the direction of gaze 131 of the driver 130 intersects the surface of touchscreen 110. The information pertaining to the point of gaze may be the point of gaze 132, i.e., where the driver 130 is gazing on the touchscreen 110 (i.e., a position), expressed relative to the display area of the touchscreen 110, e.g., in terms of a coordinate system associated with the display area. Alternatively, the information pertaining to the point of gaze may be a position of the driver's 130 eye(s) or head relative to the touchscreen 110, and a direction 131 of the driver's 130 gaze. Based on this information, the point of gaze 132 can be calculated as the intersection of the driver's direction 131 of gaze with the surface of the touchscreen 110. As yet a further alternative, the information may be an identification of a displayed UI element at which the driver 130 is gazing.

The information pertaining to the point of gaze is acquired from a gaze detector 120, aka eye tracker. The gaze detector 120 may be comprised in the computing device 100 or provided separate from, and operatively connected to, the computing device 100. For instance, the gaze detector 120 may comprise a light source and a camera. Gaze detection, aka eye tracking, is well known in the art and can be performed with below-centimeter accuracy. While different gaze detection technologies are known, the most widely used designs rely on light, typically infrared light, which is reflected from the eye and sensed by a digital camera, e.g., a video camera, or some other suitable optical sensor with spatial resolution. The captured information is then analyzed to extract eye rotation from changes in reflections. Such gaze detectors typically use the corneal reflection (the first Purkinje image) and the center of the pupil as features to track over time. A more sensitive type of gaze detector uses reflections from the front of the cornea (first Purkinje image) and the back of the lens (fourth Purkinje image) as features to track. A still more sensitive method of gaze detection is to image features from inside the eye, such as the retinal blood vessels, and follow these features as the eye rotates. Optical methods are widely used for gaze detection and are favored for being non-invasive and inexpensive. Information acquired from the gaze detector 120 may also be used for determining whether the gaze 131 of the driver 130 is stable, a fixation duration (the time during which the eye or eyes rest(s) on an object in the surroundings, such as a displayed UI element), and/or a time the driver 130 gazes at the touchscreen 110.

The computing device 100 is further operative to select at least one of the displayed UI elements based on the point of gaze 132, as is described in further detail below, and to control the touchscreen 110 to render the selected UI elements haptically distinguishably from the other UI elements, i.e., the UI elements which have not been selected. The selected UI elements are also rendered haptically distinguishably from the remaining display area of the touchscreen 110 which is not occupied by displayed UI elements (i.e., areas in-between the UI elements). The haptic rendering of the selected UI elements is preferably aligned with the visual rendering, i.e., the displaying of the selected UI elements by the touchscreen 110.

In the present context, "haptically distinguishable" means that the selected UI elements on the one hand, and the other (not selected) UI elements on the other hand, are rendered with a haptic contrast relative to each other, i.e., with respective haptic properties which are sufficiently different such that a user, e.g., the driver 130, touching the UI elements (e.g., using his/her finger 133) can sense a difference between the selected UI elements and the other UI elements. Thereby, the selected UI elements are "haptically highlighted" to facilitate selecting an intended UI element by the driver 130 without gazing at the touchscreen 110 for an extended duration of time. In other words, the selected UI elements are rendered so as to achieve a haptic contrast which makes it easier for the driver 130 to distinguish the UI elements which she/he likely intends to actuate from the other UI elements which she/he likely does not intend to actuate. The selection of the UI elements for haptically distinguishable rendering is based on where on the touchscreen 110 the driver 130 is gazing. In other words, the point of gaze 132 of the driver 130 on the touchscreen 110 is used as an indication of where on the touchscreen 110 the driver intends to touch with her/his finger 133. By reducing the time during which the driver 130 gazes at the touchscreen 110, rather than watching the traffic around the car 140, safety of the driver 130, the car 140, and the surroundings are improved.

The computing device 100 may be operative to control the touchscreen 110 to render the selected UI elements haptically distinguishably from the other UI elements by rendering the selected UI elements with haptic properties which are different from haptic properties used for rendering the other UI elements. That is, all displayed UI elements are haptically rendered, but with different properties such that the selected UI elements can be distinguished by relying on the user's (e.g., the driver's 130) sense of touch. As an alternative, the computing device 100 may be operative to control the touchscreen 110 to render the selected UI elements haptically distinguishably from the other UI elements by haptically rendering the selected UI elements but not haptically rendering the other UI elements. That is, only the selected UI elements are haptically rendered.

Rendering the selected UI elements haptically distinguishably from the other UI elements may, e.g., be achieved by controlling the touchscreen 110, in particular the surface of the touchscreen 110, to exhibit a difference in topology between the selected UI elements and the other UI elements, as well as the remaining surface area of the touchscreen 110 which is not occupied by UI elements. For instance, a difference in topology may be achieved by protruding the selected UI elements, or by creating groves at the positions of the selected UI elements, using EAPs which are deposited in a multilayer structure on top of the touchscreen 110 in a matrix structure to enable spatially-resolved actuation by application of an electric field (see, e.g., US 2002/0054060 A1, US 2011/0128239 A1). Alternatively, the haptic touchscreen 110 may be controlled to render the selected UI elements haptically distinguishably from the other UI elements by causing a change in texture, a force, a friction, or a vibration, which can be sensed by the finger 133, or other object, when touching one of the selected UI elements on the touchscreen 110. The other (non-selected) UI elements may either not be rendered haptically at all, or may be rendered with a change in texture, a force, a friction, or a vibration, which, when touching one of the other UI elements with the finger 133, or other object, can be distinguished from the selected UI elements.

The computing device 100 may optionally further be operative to initiate an action associated with the UI element actuated by the user, e.g., the driver 130. Examples of actions associated with a UI element include, but are not limited to, controlling the operation of computing device 100 or a device or apparatus controlled by the computing device 100, and starting, stopping, or modifying, functionality performed by the computing device 100 or a device or apparatus controlled by the computing device 100, such as increasing or decreasing playout volume of a music player, switching a light on or off, increasing or decreasing a temperature, etc.

In the following, and with reference to Figs. 3A-3D, examples of alternatives for selecting at least one of the displayed UI elements based on the point of gaze 132, for subsequent rendering in a haptically distinguishable manner to facilitate the correct selection by the user (e.g., the driver 130) of a displayed UI element which the user intends to actuate, are described. Figs. 3A-3D illustrate an arrangement of example UI elements 301-304 which are displayed on the touchscreen 110: a numerical keypad 301, a set 302 of buttons for selecting a radio station, a slider 303 for adjusting a front-rear balance of audio playout, and a set 304 of up-down buttons for adjusting the volume of audio playout. It will be appreciated that the UI elements 301-304 illustrated in Figs. 3A-3D are for illustrative purposes and only exemplify possible types of UI elements, their arrangement on the touchscreen 110, and functionality which is associated with the UI elements 301-304. The point of gaze 132 is in Figs. 3A-3D marked with a cross, and the selected UI elements are indicated with bold lines.

With reference to Fig. 3A, the computing device 100 may be operative to select at least one of the displayed UI elements 310-304 based on respective distances of the displayed UI elements 301-304 from the point of gaze 132. For instance, one or more of the displayed UI elements 301-304 which are closest to, i.e., have the shortest distance to, the point of gaze 132 may be selected. In practice, the closest UI elements 301-304 may be selected based on a threshold distance, which in Figs. 3A-3D is indicated as a dashed circle 310 (the threshold distance is the radius of the circle 310). As illustrated in Fig. 3A, all displayed UI elements 301-304 which have at least part of their area within the threshold distance from the point of gaze 132, as marked by the circle 310, are selected (in the example in Fig. 3A, buttons 301 "6" and "9", button 302 "P1", the slider 303, and the up-down buttons 304 are selected). Optionally, if the computing device 100 is operative to select displayed UI elements 301-304 within a threshold distance (marked by the circle 310) from the point of gaze 132, the threshold distance may decrease with an increasing fixation duration of the user's (e.g., the driver's 130) gaze at the touchscreen 110. This is based on the understanding that the longer the driver 130 gazes at the touchscreen 110, and preferably gazes at substantially the same point of gaze 132, the more likely it is that the point of gaze 132 reflects the position at which the driver intends to touch the touchscreen 110. Information pertaining to the fixation duration may be acquired from the gaze detector 120. In practice, the computing device 100 may be operative to select, and haptically render, displayed UI elements 301-304 based on an initial threshold distance which is gradually decreased with increasing fixation duration. Optionally, the threshold distance may be kept constant for a preset duration of time and gradually decreased after the preset duration of time (e.g., one second) has lapsed.

As an alternative, a predetermined number of the displayed UI elements 301-304 which are closest to the point of gaze 132 may be selected, e.g., the three closest UI elements 301-304. This may be achieved by calculating respective distances between the displayed UI elements 301-304 (e.g., from their respective geometric center or the closest point of their circumference) and the point of gaze 132, sorting the calculated distances in increasing order, and selecting the predetermined number of closest UI elements 301-304, i.e., the predetermined number of UI elements 301-304 having the shortest distance to the point of gaze 132.

With reference to Fig. 3B, the computing device 100 may be operative to select at least one of the displayed UI elements 301-304 based on the selected at least one UI element being displayed within a partial area of the touchscreen 110, wherein the partial area encompasses the point of gaze 132. In the present context, a partial area may, e.g., be the left, right, upper, or lower, half of the touchscreen 110. In Fig. 3B, the vertical and horizontal bisections of the touchscreen 110 into left and right halves, as well as upper and lower halves, respectively, are indicated by dashed lines 321 and 322. As a further example, a partial area of the touchscreen 110 may be one of the quadrants defined by the bisections 321 and 322. In the example illustrated in Fig. 3B, the point of gaze 132 (marked by a cross, the reference number is omitted for the sake of clarity) is in the upper-right quadrant of the touchscreen 110, and the displayed UI elements 302 and 303 are accordingly selected. As an alternative, a partial area of the touchscreen 110 may be an area, such as a two-dimensional geometric shape, with the point of gaze 132 at its center. The two-dimensional geometric shape may, e.g., be a circle (as illustrated in Fig. 3A), an ellipse, a square, a rectangle, or the like. Optionally, the computing device 100 may be operative to decrease a size of the partial area of the touchscreen 110 with an increasing fixation duration of the user's (e.g., the driver's 130) gaze at the touchscreen 110. The longer the driver 130 stares at the touchscreen 110, and preferably at substantially the same point of gaze 132, the more likely it is that the point of gaze 132 reflects the position at which the driver 130 intends to touch the touchscreen 110. Accordingly, the number of displayed UI elements which need to be selected for haptically distinguishable rendering can be reduced.

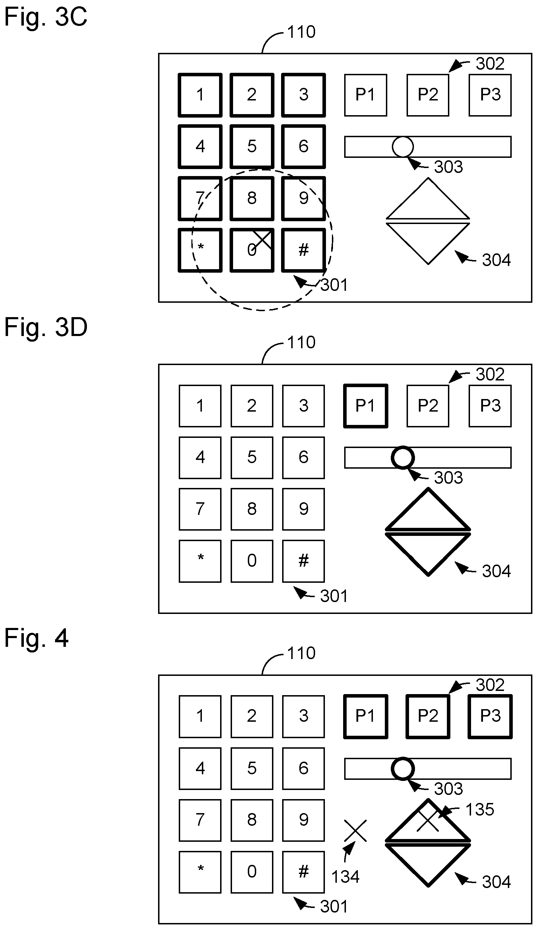

With reference to Fig. 3C, the computing device 100 may be further operative to select at least one additional of the displayed UI elements 301-304 based on a spatial arrangement of the displayed UI elements 301-304. For instance, the computing device 100 may be operative to select at least one additional of the displayed UI elements 301-304 based on the selected at least one UI element and the at least one additional UI element being arranged as a group of UI elements. This is exemplified in Fig. 3C, which illustrates the point of gaze 132 (marked as a cross, the reference number is omitted for the sake of clarity) coinciding with the button 301 "0". In this case, all buttons 301 which are arranged as a group, in this case the entire numerical keypad 301, are selected in addition to the button 301 "0" which is selected based on the point of gaze 132. Alternatively, if at least one of the displayed UI elements 301-304 is selected based on respective distances of the displayed UI elements from the point of gaze, e.g., all displayed UI elements 301-304 within a threshold distance (marked by the dashed circle in Fig. 3C, the reference numeral is omitted for the sake of clarity) from the point of gaze 132, the entire numerical keypad 301 is selected in addition to the buttons 301 "7", "8", "9", "*", "0", and "#", which are selected based on the threshold distance (marked by the dashed circle) from the point of gaze 132.

The computing device 100 may optionally be further operative to select at least one additional of the displayed UI elements 301-304 based on related functionality which is controlled by the selected at least one UI element and the at least one additional UI element. In other words, displayed UI elements 301-304 which are related in terms of the functionality, operations, or actions, which they control, are selected. For instance, and with reference to Fig. 3C, if one of more buttons which are part of the numerical keypad 301 are selected, either based on the point of gaze 132 or respective distances of the UI elements from the point of gaze 132, all remaining buttons which belong to the numerical keypad 301 are selected. As a further example, if one of the buttons 302 for selecting a preset radio station would be selected (e.g., "P1"), either based on the point of gaze 132 or respective distances of the buttons 302 for selecting a preset radio station from the point of gaze 132, the other buttons 302 for selecting a preset radio station (e.g., "P2" and "P3") would be additionally selected.

With reference to Fig. 3D, the computing device 100 may be further operative to select at least one additional of the displayed UI elements 301-304 based on an actuation of a displayed UI element 301-304 by the user, e.g., the driver 130. In the present context, an actuation of a displayed UI element means that the driver is interacting with, i.e., touching using a finger 133, a stylus pen, or a similar object, a displayed UI element so as to initiate an action, operation, or functionality, which is associated with the UI element. In other words, the driver is clicking on the UI element. The at least one additional of the displayed UI elements 301-304 which is selected may, e.g., be a UI element which typically is selected subsequent to the actuated UI element. For instance, the at least one additional UI element may be related to the actuated UI element in terms of functionality. For the example illustrated in Fig. 3D, the driver 130 has actuated the button 302 "P1" for selecting a radio station. In response to detecting that the button 302 "P1" has been actuated, the UI elements 303 (e.g., for adjusting a front-rear balance of audio playout) and 304 (e.g., for adjusting the volume of audio playout) are selected as additional UI elements for haptically distinguishable rendering because the driver 130 is likely to adjust audio-playout settings after switching on the radio or switching to a different radio station. The at least one additional of the displayed UI elements 301-304 may, e.g., be selected based on stored associations between, or sequences of, UI elements. These associations or sequences may either be configured by a provider of the computing device, or a software application which is executed on the computing device 100, or by the driver 130. As an alternative, the computing device 100 may be operative to learn such associations or sequences during operation, by recording and statistically evaluating which of the displayed UI elements 301-304 are more likely to be sequentially actuated by the driver 130 than others.

The computing device 100 may optionally be operative to select at least one of the displayed UI elements 301-304 further based on context information. Context information may, e.g., relate to weather, ambient noise, road conditions, traffic conditions, a current configuration of the vehicle 140, a number of passengers in the vehicle 140, or the like. As an example, if a passenger seat is not occupied, the driver 130 is unlikely to activate a heat heater for the unoccupied seat, and the corresponding UI element is consequently not selected for haptically distinguishable rendering. On the contrary, UI elements for controlling heat seaters of occupied passenger seats are selected for haptically distinguishable rendering. As a further example, if the environment is relatively bright, the driver 130 is unlikely to switch on the car's 140 lights, and the corresponding UI element is consequently not selected for haptically distinguishable rendering. On the contrary, UI elements for activating the car's 140 lights are selected for haptically distinguishable rendering if the ambient light conditions mandate using lights.

The computing device 100 may optionally be operative to adjust one or more of a size of the selected UI element(s), and a haptic contrast between the selected UI element(s) and the other UE elements, based on a duration of time the user, e.g., the driver 130, gazes at the touchscreen 110. Preferably, the size of the UI elements is adjusted based on the fixation duration, i.e., the time duration of time during which the point of gaze 132 is substantially stable. For example, the selected UI elements may be haptically rendered with an increased size, i.e., area of the UI elements, if the driver 130 gazes at the touchscreen 110 only during a short time interval, e.g., a few tens of a second. This is advantageous in that the acquired point of gaze 132 may not reliably reflect the position 134 on the touchscreen 110 which the driver 130 intends to touch, as compared to situations when the driver 130 gazes at the touchscreen 110 during a longer time interval, e.g., one or two seconds. Thereby, the diver's 130 actuation of the intended UI element is facilitated. As an alternative, or in addition, to adjusting a size of the selected UI element(s), a haptic contrast between the selected UI element(s) and the other UE elements may be adjusted so as to facilitate identifying the intended UI element by the driver 130.

The computing device 100 may optionally be further operative to re-select at least one of the displayed UI elements 301-304 based on a change in the point of gaze 132. For instance, this may be the case if the driver 130 gazes at the touchscreen 110 for a while, but subsequently gazes at a different point of the touchscreen 110, either directly (without stop gazing at the touchscreen 110) or interrupted by gazing in a different direction (e.g., at the street in front of the car 140) during a short duration of time. In this case, the selection of at least one of the displayed UI elements 301-304 based on the previous point of gaze may be reset, and at least one of the displayed UI elements 301-304 is selected based on the current point of gaze 132. Preferably, re-selection of at least one of the displayed UI elements 301-304 is only performed if the change in the point of gaze 132 exceeds a threshold distance, e.g., a few millimeters or a centimeter.

The computing device 100 may optionally be operative to select at least one of the displayed UI elements 301-304, and/or to control the touchscreen 110 to render the selected UI elements haptically distinguishably from the other UI elements, in response to one or more of: detecting that the user (e.g., the driver 130) is gazing at the touchscreen 110, detecting a touch input to the touchscreen 110, detecting that an object (e.g., the finger 133 or a stylus pen) is approaching the touchscreen 110, and determining that the point of gaze 132 is substantially stable (i.e., the gaze 131 of the driver 130 is substantially stable). Detecting a touch input to the touchscreen 110 may, e.g., be based on information received from the touchscreen 110 that a touch input to the touchscreen 110 has been detected, by means of the finger 133, a stylus pen, or other object, irrespective of a position 134 indicating where on the touchscreen 110 the touch input was received. Detecting that an object, such as the finger 133, is approaching the touchscreen 110 may, e.g., be based on information from the gaze detector 120. This may be the case if the gaze detector 102 comprises a digital camera capable of identifying an object which is approaching the touchscreen 110. Alternatively, an object approaching the touchscreen 110 may be detected by utilizing a LiDAR or a capacitive touchscreen which is capable of detecting that the finger 133 is hovering over the capacitive surface of the touchscreen 110.

In particular, the computing device 100 may be operative to select at least one of the displayed UI elements 310-304, and/or to control the touchscreen 110 to render the selected UI elements haptically distinguishably from the other UI elements in response to detecting that the user (e.g., the driver 130) is gazing at the touchscreen 110, detecting that an object (such as the finger 133 or a stylus pen) is approaching the touchscreen 110 (e.g., using the gaze detector 120 or capacitive touchscreen, as described hereinbefore, a separate camera, or a LiDAR), and detecting that the driver ceases gazing at the touchscreen 110. This sequence of events is indicative of a typical operation of the touchscreen 110 by the driver 130. More specifically, the driver 130 starts gazing at the touchscreen 110 to identify the intended UI element or elements, i.e., the UI element(s) which she/or intends to touch or actuate. Then, the driver starts extending her/his finger 133 towards the touchscreen 110, while still gazing at the touchscreen 110. This is likely initiated by the driver's 130 hand releasing the wheel and moving towards the touchscreen 110. Once the driver 130 has started extending her/his finger 133 towards the touchscreen 110, into the direction of the intended point of touch 134, she/he can cease, i.e., stop or discontinue, gazing at the touchscreen 110 to focus her/is attention back to the road or the traffic.

The computing device 100 may optionally be operative to control the touchscreen 110 to cease, i.e., stop or discontinue, rendering the selected UI elements haptically distinguishably from the other UI elements in response to detecting that a predetermined duration of time since the user (e.g., the driver 130) has started gazing at the touchscreen 110 has expired without detecting a touch input to the touchscreen 110. This may, e.g., be the case if the driver has accidentally gazed at the touchscreen 110, without intending to touch the touchscreen 110, or has changed her/his mind after gazing at the touchscreen 110. Even further, the driver 103 may have gazed at the touchscreen 110 to read information, e.g., an inside or outside temperature, or to check which radio station is currently selected, without the intention to touch the touchscreen 110 or a displayed UI element 301-304.

The computing device 100 may optionally be further operative to correct the point of gaze 132 by a gaze-point offset which is determined based on preceding touch inputs received by the touchscreen 110. For instance, the computing device 100 may be operative, in response to receiving touch inputs to the touchscreen 110, to calculate an offset vector (distance and direction) between the position 134 of the touch input on the touchscreen 110 and the point of gaze 132 preceding the touch input. By averaging offset vectors over a number of touch inputs, an estimate is obtained which can be used for correcting a systematic offset between the point of gaze 132, i.e., where the user (e.g., the driver 130) is gazing prior to selecting a displayed UI element 301-304, and the position 134 of a subsequent touch input by the driver, which reflects where on the touchscreen 110 the driver intended to touch. The calculated offset vectors may optionally be calculated and/or stored based on the point of gaze 132, i.e., as a function of where on the touchscreen 110 the driver 130 had gazed before touching the touchscreen 110. Thereby, any dependence of the systematic offset on where on the touchscreen 110 the driver 130 gazes is taken into consideration.

With reference to Fig. 4, the computing device 100 may optionally be further operative to detect a first touch input to the touchscreen 110, and to detect a second touch input to the touchscreen 110, wherein the second touch input corresponds to an actuation of a displayed UI element 304 by the user, e.g., the driver 130. The computing device 100 is further operative to, if the second touch input is detected within a threshold time interval from the first touch input, and a position 135 of the second touch input is within a threshold distance from a position 134 of the first touch input, control the touchscreen 110 to display the actuated UI element 304 at the first position. This embodiment applies to scenarios when the driver 130 has touched the touchscreen 110 at a first position 134, but has missed the displayed UI element which she/he had intended to actuate, e.g., the arrow-up button 304 illustrated in Fig. 4. When realizing that she/he has not found the intended UI element, e.g., because the first touch input occurred at a position 134 where no haptically highlighted UI element is displayed, the driver 130 performs a second touch input at a second position 135, as a means to correct the first touch input. In order to discriminate intended subsequent touch inputs at the second position 135 from corrective subsequent touch inputs, only second touch inputs at a second position 135 which are within a threshold distance from the position 134 of the first touch input (e.g., one or a few centimeters), and which occur within a threshold time interval from the first touch input (e.g., one or a few seconds), are considered to represent corrective actions by the driver 130. In response thereto, the actuated UI element 304 is displayed at the position 134 where the first touch input has occurred, because the driver 130 had expected the actuated UI element 134 to be displayed at the first position 134. In practice, this may be achieved by moving the actuated UI element 304 such that is area encompasses the first position 134 (e.g., by re-arranging the displayed UI elements on the touchscreen 110), or to increase a size of the actuated UI element 304 such that is area encompasses the first position 134. Optionally, this corrective action may be applied only after the driver 130 has corrected a first touch input several times, with the vector difference between the position 135 of the second touch input and the position 134 of the first touch input being relatively constant, as this is an indication that the driver 130 missing the intended UI element by a margin is a systematic error in the driver's 130 estimation of where to touch the touchscreen 110 without gazing at the touchscreen 110. Optionally, the computing device 110 is further operative to, if the first touch input triggers an action, detect that the user (e.g., the driver 130) reverses the action triggered by the first touch input before the second touch input is received. For instance, this may be the case if the first touch input corresponds to an actuation of a displayed UI element, which is associated with an action such as lowering a playout volume or switching off music playout, by the driver. Such situation may occur if a displayed UI element is present at the position 134 of the first touch, but the displayed UI element is not the UI element which the driver 130 intended to touch or actuate. In such scenario, the driver 130 may first cancel the unintended action, e.g., by raising the volume or switching on music playout again, before attempting to trigger the intended action by the performing the second touch input at the second position 135.

Even though embodiments of the invention are described in relation to a haptic touchscreen which is comprised in a vehicle, such as the haptic touchscreen 110 illustrated in in Fig. 1, embodiments of the invention are not limited to in-vehicle haptic touchscreens. For instance, the computing device 100 for controlling a haptic touchscreen may alternatively be embodied as a smartphone, a tablet, or a computer screen, thereby enabling a user to control operation of the computing device 100, or any other device or apparatus operatively connected to the computing device 100, without looking at the touchscreen 110 for an extended duration of time. For instance, this may allow users to operate their smartphones without retrieving them from a pocket where they are stored. As a further example, a user of a smartphone or tablet may operate her/his computing device while watching a presenter without looking at the touchscreen of her/his smartphone or tablet for an extended duration of time.

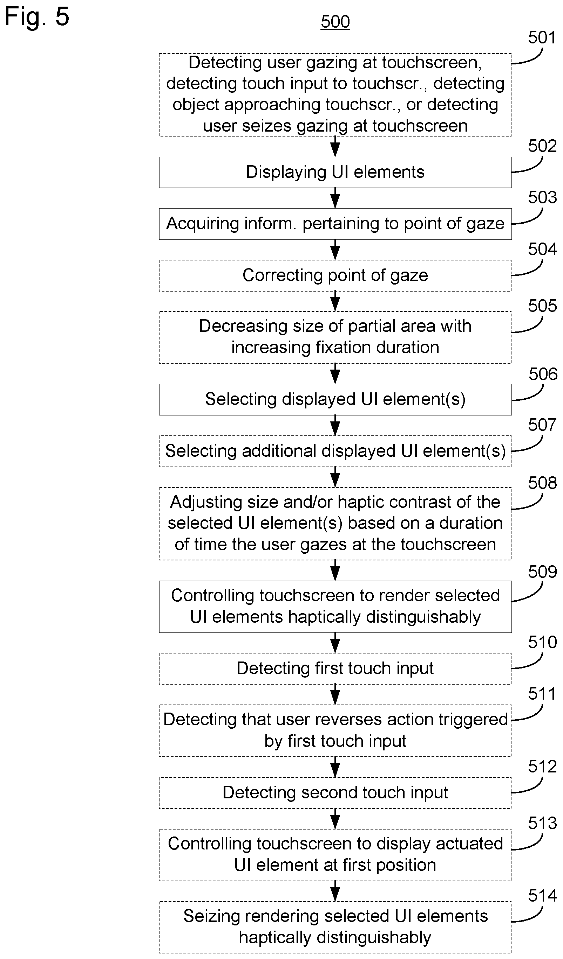

In the following, embodiments of a method 500 of controlling a haptic touchscreen 110 are described with reference to Fig. 5. The method 500 is performed by a computing device 100 and comprises displaying 502 a plurality of UI elements 301-304 on the touchscreen 110. The method 500 further comprises acquiring 503 information pertaining to a point of gaze 132 of a user 130 gazing at the touchscreen 110. The information pertaining to the point of gaze 132 is acquired from a gaze detector 120. The method 500 further comprises selecting 506 at least one of the displayed UI elements 301-304 based on the point of gaze 132. The method 500 further comprises controlling 509 the touchscreen 110 to render the selected UI elements haptically distinguishably from the other UI elements. For instance, the touchscreen 110 may be controlled to render the selected UI elements haptically distinguishably from the other UI elements by rendering the selected UI elements with haptic properties different from haptic properties used for rendering the other UI elements. Alternatively, the touchscreen 110 may be controlled to render the selected UI elements haptically distinguishably from the other UI elements by haptically rendering the selected UI elements but not haptically rendering the other UI elements.

The at least one of the displayed UI elements 301-304 may be selected 506 based on respective distances of the displayed UI elements 301-304 from the point of gaze 132. Optionally, the selecting 506 at least one of the displayed UI elements 301-304 may comprise selecting displayed UI elements 301-304 within a threshold distance from the point of gaze 132, wherein the threshold distance decreases with an increasing fixation duration of the user's gaze 131 at the touchscreen 110.

The least one of the displayed UI elements 301-304 mat alternatively be selected 506 based on the selected at least one UI element being displayed within a partial area the touchscreen 110, wherein the partial area encompasses the point of gaze 132. Optionally, the method 500 may further comprise decreasing 505 a size of the partial area of the touchscreen 110 with an increasing fixation duration of the user's gaze 131 at the touchscreen 110.

The method 500 may further comprise selecting 507 at least one additional of the displayed UI elements 301-304 based on a spatial arrangement of the displayed UI elements 301-304. Optionally, the least one additional of the displayed UI elements 301-304 may be selected 507 based on the selected at least one UI element and the at least one additional UI element being arranged as a group of UI elements.

The method 500 may further comprise selecting 507 at least one additional of the displayed UI elements 301-304 based on related functionality which is controlled by the selected at least one UI element and the at least one additional UI element.

The method 500 may further comprise selecting 507 at least one additional of the displayed UI elements 301-304 based on an actuation of a displayed UI element 301-304 by the user 130.

Optionally, the at least one of the displayed UI elements 301-304 may be selected further based on context information.

The method 500 may further comprise adjusting 508 one or more of: a size of the selected UI element(s), and a haptic contrast between the selected UI element(s) and the other UI elements, based on a duration of time the user 130 gazes at the touchscreen 110.

The method 500 may further comprise re-selecting at least one of the displayed UI elements 301-304 based on a change in the point of gaze 132.

The at least one of the displayed UI elements 301-304 is selected 506 and/or the touchscreen 110 is controlled 509 to render the selected UI elements haptically distinguishably from the other UI elements in response to one or more of 501: detecting that the user 130 is gazing at the touchscreen 110, detecting a touch input to the touchscreen 110, detecting that an object 133 is approaching the touchscreen 110, and determining that the point of gaze 132 is substantially stable.

The at least one of the displayed UI elements 301-304 is selected 506 and/or the touchscreen 110 is controlled 509 to render the selected UI elements haptically distinguishably from the other UI elements in response to: detecting that the user is gazing at the touchscreen, detecting that an object is approaching the touchscreen, and detecting that the user ceases gazing at the touchscreen.

The method 500 may further comprise ceasing 514 rendering the selected UI elements haptically distinguishably from the other UI elements in response to detecting that a predetermined duration of time since the user 130 has started gazing at the touchscreen 110 has expired without detecting a touch input to the touchscreen 110.

The method 500 may further comprise correcting the point of gaze 132 by a gaze-point offset determined based on preceding touch inputs received by the touchscreen 110.

The method 500 may further comprise detecting 510 a first touch input to the touchscreen 110 and detecting 512 a second touch input to the touchscreen 110. The second touch input corresponding to an actuation of a displayed UI element 304 by the user 130. The method 500 may further comprises controlling 513 the touchscreen 110 to display the actuated UI element at the first position 134 if the second touch input is detected within a threshold time interval from the first touch input, and a position 135 of the second touch input is within a threshold distance from a position 134 of the first touch input. Optionally, the first touch input triggers an action, and the method 500 further comprises detecting 511 that the user 130 reverses the action triggered by the first touch input before the second touch input is received.

It will be appreciated that the method 500 may comprise additional, alternative, or modified, steps in accordance with what is described throughout this disclosure. An embodiment of the method 500 may be implemented as the computer program 213 comprising instructions which, when the computer program 213 is executed by the computing device 100 cause the computing device 100 to carry out the method 500 and become operative in accordance with embodiments of the invention described herein. The computer program 213 may be stored in a computer-readable data carrier, such as the memory 212. Alternatively, the computer program 213 may be carried by a data carrier signal, e.g., downloaded to the memory 212 via the network interface circuitry (not shown in Fig. 2).

The person skilled in the art realizes that the invention by no means is limited to the embodiments described above. On the contrary, many modifications and variations are possible within the scope of the appended claims.

## Claims

1. A computing device (100) for controlling a haptic touchscreen (110), the computing device comprising processing circuitry (210) causing the computing device to become operative to:
display a plurality of user-interface, UI, elements (301-304) on the touchscreen (110),
acquire information pertaining to a point of gaze (132) of a user (130) gazing at the touchscreen from a gaze detector (120),
**characterized in that** the computing device becomes further operative to select at least one of the displayed UI elements (301-304) based on the point of gaze (132), and control the touchscreen (110) to render the selected UI elements haptically distinguishable from the other UI elements in response to a sequence of:
detecting that the user (130) is gazing at the touchscreen (110), detecting that an object (133) is approaching the touchscreen (110), and detecting that the user (130) ceases gazing at the touchscreen (130).

2. The computing device (100) according to claim 1, operative to select at least one of the displayed UI elements (301-304) based on respective distances of the displayed UI elements (301-304) from the point of gaze (132).

3. The computing device (100) according to claim 2, operative to select displayed UI elements (301-304) within a threshold distance from the point of gaze (132), wherein the threshold distance decreases with an increasing fixation duration of the user's gaze (131) at the touchscreen (110).

4. The computing device (100) according to claim 1, operative to select at least one of the displayed UI elements (301-304) based on the selected at least one UI element being displayed within a partial area the touchscreen (110), the partial area encompassing the point of gaze (132).

5. The computing device (100) according to claim 4, operative to decrease a size of the partial area of the touchscreen (110) with an increasing fixation duration of the user's gaze (131) at the touchscreen (110).

6. The computing device (100) according to any one of claims 1 to 5, further operative to select at least one additional of the displayed UI elements (301-304) based on the selected at least one UI element and the at least one additional UI element being arranged as a group of UI elements.

7. The computing device (100) according to any one of claims 1 to 6, further operative to select at least one additional of the displayed UI elements (301-304) based on related functionality which is controlled by the selected at least one UI element and the at least one additional UI element.

8. The computing device (100) according to any one of claims 1 to 7, operative to select at least one of the displayed UI elements (301-304) further based on context information.

9. The computing device (100) according to any one of claims 1 to 8, further operative to adjust one or more of: a size of the selected UI element(s), and a haptic contrast between the selected UI element(s) and the other UE elements, based on a duration of time the user (130) gazes at the touchscreen (110).

10. The computing device (100) according to any one of claims 1 to 9, operative to select at least one of the displayed UI elements (301-304) and control the touchscreen (110) to render the selected UI elements haptically distinguishable from the other UI elements in response to one or more of: detecting that the user (130) is gazing at the touchscreen (110), detecting a touch input to the touchscreen (110), detecting that an object (133) is approaching the touchscreen (110), and determining that the point of gaze (132) is substantially stable.

11. The computing device (100) according to any of claims 1 to 10, further operative to correct the point of gaze (132) by a gaze-point offset determined based on preceding touch inputs received by the touchscreen (110).

12. The computing device (100) according to any of claims 1 to 11, further operative to:
detect a first touch input to the touchscreen (110),
detect a second touch input to the touchscreen (110), the second touch input corresponding to an actuation of a displayed UI element (301-304) by the user (130), and
if the second touch input is detected within a threshold time interval from the first touch input, and a position (135) of the second touch input is within a threshold distance from a position (134) of the first touch input, control the touchscreen (110) to display the actuated UI element (304) at the first position (134).

13. A method (500) of controlling a haptic touchscreen (110), the method being performed by a computing device (100) and comprising:
displaying (502) a plurality of user-interface, UI, elements (301-304) on the touchscreen (110),
acquiring (503) information pertaining to a point of gaze (132) of a user (130) gazing at the touchscreen (110) from a gaze detector (120),
the method **characterised in that** it further comprises:
in response to a sequence of: detecting that the user (130) is gazing at the touchscreen (110), detecting that an object (133) is approaching the touchscreen (110), and detecting that the user (130) ceases gazing at the touchscreen (130):
selecting (506) at least one of the displayed UI elements (301-304) based on the point of gaze (132), and
controlling (509) the touchscreen (110) to render the selected UI elements haptically distinguishable from the other UI elements.

14. A computer program (213) comprising instructions which, when the computer program (213) is executed by a computing device (100), causes the computing device (100) to carry out the method according to claim 13.

15. A computer-readable data carrier (212) having stored thereon the computer program (213) according to claim 14.

## Patentansprüche

1. Rechenvorrichtung (100) zum Steuern eines haptischen Touchscreens (110), wobei die Rechenvorrichtung eine Verarbeitungsschaltung (210) umfasst, welche die Rechenvorrichtung veranlasst, wirksam zu werden, um
eine Vielzahl von Benutzeroberflächen-, UI-Elementen, (301-304) auf dem Touchscreen (110) anzuzeigen,
Informationen im Zusammenhang mit einem Blickpunkt (132) eines Benutzers (130), der auf den Touchscreen blickt, von einem Blickdetektor (120) zu erfassen,
**dadurch gekennzeichnet, dass** die Rechenvorrichtung weiter wirksam ist, um mindestens eines der angezeigten UI-Elemente (301-304) basierend auf dem Blickpunkt (132) auszuwählen und den Touchscreen (110) zu steuern, um die ausgewählten UI-Elemente haptisch von den anderen UI-Elementen unterscheidbar als Reaktion auf eine Abfolge zu machen von: Erkennen, dass der Benutzer (130) auf den Touchscreen (110) blickt, Erkennen, dass sich ein Objekt (133) dem Touchscreen (110) nähert, und Erkennen, dass der Benutzer (130) aufhört, auf den Touchscreen (130) zu blicken.

2. Rechenvorrichtung (100) nach Anspruch 1, die wirksam ist, um mindestens eines der angezeigten UI-Elemente (301-304) basierend auf jeweiligen Abständen der angezeigten UI-Elemente (301-304) vom Blickpunkt (132) auszuwählen.

3. Rechenvorrichtung (100) nach Anspruch 2, die wirksam ist, um angezeigte UI-Elemente (301-304) innerhalb eines Schwellenabstands vom Blickpunkt (132) auszuwählen, wobei der Schwellenabstand mit zunehmender Fixierdauer des Blicks (131) des Benutzers auf dem Touchscreen (110) abnimmt.

4. Rechenvorrichtung (100) nach Anspruch 1, die wirksam ist, um mindestens eines der angezeigten UI-Elemente (301-304) basierend darauf auszuwählen, dass das ausgewählte mindestens eine UI-Element in einem Teilbereich des Touchscreens (110) angezeigt wird, wobei der Teilbereich den Blickpunkt (132) einschließt.

5. Rechenvorrichtung (100) nach Anspruch 4, die wirksam ist, um eine Größe des Teilbereichs des Touchscreens (110) mit zunehmender Fixierdauer des Blicks (131) des Benutzers auf dem Touchscreen (110) zu verringern.

6. Rechenvorrichtung (100) nach einem der Ansprüche 1 bis 5, die weiter wirksam ist, um mindestens ein zusätzliches der angezeigten UI-Elemente (301-304) basierend auf dem ausgewählten mindestens einen UI-Element auszuwählen, wobei das mindestens eine zusätzliche UI-Element als Gruppe von UI-Elementen angeordnet ist.

7. Rechenvorrichtung (100) nach einem der Ansprüche 1 bis 6, die weiter wirksam ist, um mindestens ein zusätzliches der angezeigten UI-Elemente (301-304) basierend auf einer zugehörigen Funktionalität auszuwählen, die durch das ausgewählte mindestens eine UI-Element und das mindestens eine zusätzliche UI-Element gesteuert wird.

8. Rechenvorrichtung (100) nach einem der Ansprüche 1 bis 7, die wirksam ist, um mindestens eines der angezeigten UI-Elemente (301-304) weiter basierend auf Kontextinformationen auszuwählen.

9. Rechenvorrichtung (100) nach einem der Ansprüche 1 bis 8, die weiter wirksam ist, um eines oder mehr anzupassen von: einer Größe des/der ausgewählten UI-Elements/Elemente und einem haptischen Kontrast zwischen dem/den ausgewählten UI-Element/Elementen und den anderen UE-Elementen, basierend auf einer Zeitdauer, die der Benutzer (130) auf den Touchscreen (110) blickt.

10. Rechenvorrichtung (100) nach einem der Ansprüche 1 bis 9, die wirksam ist, um mindestens eines der angezeigten UI-Elemente (301-304) auszuwählen und den Touchscreen (110) zu steuern, um die ausgewählten UI-Elemente haptisch von den anderen UI-Elementen unterscheidbar als Reaktion auf eines oder mehr zu machen von: Erkennen, dass der Benutzer (130) auf den Touchscreen (110) blickt, Erkennen einer Berührungseingabe auf dem Touchscreen (110), Erkennen, dass sich ein Objekt (133) dem Touchscreen (110) nähert, und Bestimmen, dass der Blickpunkt (132) im Wesentlichen stabil ist.

11. Rechenvorrichtung (100) nach einem der Ansprüche 1 bis 10, die weiter wirksam ist, um den Blickpunkt (132) um einen Blickpunktversatz zu korrigieren, der basierend auf vorhergehenden, vom Touchscreen (110) empfangenen Berührungseingaben bestimmt wird.

12. Rechenvorrichtung (100) nach einem der Ansprüche 1 bis 11, die weiter wirksam ist, um:
eine erste Berührungseingabe auf dem Touchscreen (110) zu erkennen,
eine zweite Berührungseingabe auf dem Touchscreen (110) zu erkennen, wobei die zweite Berührungseingabe einer Betätigung eines angezeigten UI-Elements (301-304) durch den Benutzer (130) entspricht, und
wenn die zweite Berührungseingabe innerhalb eines Schwellenzeitintervalls ab der ersten Berührungseingabe erkannt wird und eine Position (135) der zweiten Berührungseingabe innerhalb einer Schwellendistanz von einer Position (134) der ersten Berührungseingabe liegt, den Touchscreen (110) zu steuern, um das betätigte UI-Element (304) an der ersten Position (134) anzuzeigen.

13. Verfahren (500) zum Steuern eines haptischen Touchscreens (110), wobei das Verfahren von einer Rechenvorrichtung (100) durchgeführt wird und umfasst:
Anzeigen (502) einer Vielzahl von Benutzeroberflächen-, UI-Elementen, (301-304) auf dem Touchscreen (110),
Erfassen (503) von Informationen im Zusammenhang mit einem Blickpunkt (132) eines Benutzers (130), der auf den Touchscreen (110) blickt, von einem Blickdetektor (120), wobei das Verfahren **dadurch gekennzeichnet ist, dass** es weiter umfasst:
als Reaktion auf eine Abfolge von: Erkennen, dass der Benutzer (130) auf den Touchscreen (110) blickt, Erkennen, dass sich ein Objekt (133) dem Touchscreen (110) nähert, und Erkennen, dass der Benutzer (130) aufhört, auf den Touchscreen (130) zu blicken:
Auswählen (506) mindestens eines der angezeigten UI-Elemente (301-304) basierend auf dem Blickpunkt (132), und
Steuern (509) des Touchscreens (110), um die ausgewählten UI-Elemente haptisch von den anderen UI-Elementen unterscheidbar zu machen.

14. Computerprogramm (213), das Anweisungen umfasst, die, wenn das Computerprogramm (213) von einer Rechenvorrichtung (100) ausgeführt wird, die Rechenvorrichtung (100) veranlassen, das Verfahren nach Anspruch 13 auszuführen.

15. Computerlesbarer Datenträger (212), auf dem das Computerprogramm (213) nach Anspruch 14 gespeichert ist.

## Revendications

1. Dispositif informatique (100) pour commander un écran tactile haptique (110), le dispositif informatique comprenant un ensemble de circuits de traitement (210) faisant en sorte que le dispositif informatique puisse servir à :
afficher une pluralité d'éléments d'interface utilisateur, UI, (301-304) sur l'écran tactile (110),
acquérir des informations relatives à un point de regard (132) d'un utilisateur (130) regardant l'écran tactile à partir d'un détecteur de regard (120),
**caractérisé en ce que** le dispositif informatique peut en outre servir à sélectionner au moins l'un des éléments UI (301-304) affichés sur la base du point de regard (132), et commander l'écran tactile (110) pour qu'il rende les éléments UI sélectionnés haptiquement différenciables des autres éléments UI en réponse à une séquence de : détection que l'utilisateur (130) regarde l'écran tactile (110), détection qu'un objet (133) s'approche de l'écran tactile (110) et détection que l'utilisateur (130) cesse de regarder l'écran tactile (130).

2. Dispositif informatique (100) selon la revendication 1, servant à sélectionner au moins l'un des éléments UI (301-304) affichés en fonction de distances respectives des éléments UI (301-304) affichés par rapport au point de regard (132).

3. Dispositif informatique (100) selon la revendication 2, servant à sélectionner des éléments UI (301-304) affichés à une distance seuil du point de regard (132), dans lequel la distance seuil diminue avec une durée de fixation croissante du regard (131) de l'utilisateur sur l'écran tactile (110).

4. Dispositif informatique (100) selon la revendication 1, servant à sélectionner au moins l'un des éléments UI (301-304) affichés sur la base du au moins un élément UI sélectionné affiché dans une zone partielle de l'écran tactile (110), la zone partielle englobant le point de regard (132).

5. Dispositif informatique (100) selon la revendication 4, servant à diminuer une taille de la zone partielle de l'écran tactile (110) avec une durée de fixation croissante du regard (131) de l'utilisateur sur l'écran tactile (110).

6. Dispositif informatique (100) selon l'une quelconque des revendications 1 à 5, servant en outre à sélectionner au moins un élément UI supplémentaire parmi les éléments UI (301-304) affichés sur la base du au moins un élément UI sélectionné et du au moins un élément UI supplémentaire agencé sous forme de groupe d'éléments UI.

7. Dispositif informatique (100) selon l'une quelconque des revendications 1 à 6, servant en outre à sélectionner au moins un élément UI supplémentaire parmi les éléments UI (301-304) affichés sur la base d'une fonctionnalité associée qui est commandée par le au moins un élément UI sélectionné et le au moins un élément UI supplémentaire.

8. Dispositif informatique (100) selon l'une quelconque des revendications 1 à 7, servant à sélectionner au moins l'un des éléments UI (301-304) affichés en fonction, en outre, d'informations contextuelles.

9. Dispositif informatique (100) selon l'une quelconque des revendications 1 à 8, servant en outre à ajuster un ou plusieurs éléments parmi : une taille du ou des éléments UI sélectionnés et un contraste haptique entre le ou les éléments UI sélectionnés et les autres éléments d'UE, en fonction d'une durée pendant laquelle l'utilisateur (130) regarde l'écran tactile (110).

10. Dispositif informatique (100) selon l'une quelconque des revendications 1 à 9, servant à sélectionner au moins l'un des éléments UI (301-304) affichés et commander l'écran tactile (110) pour qu'il rende les éléments UI sélectionnés haptiquement différenciables des autres éléments UI en réponse à un ou plusieurs éléments parmi : la détection que l'utilisateur (130) regarde l'écran tactile (110), la détection d'une entrée tactile sur l'écran tactile (110), la détection qu'un objet (133) s'approche de l'écran tactile (110) et la détermination que le point de regard (132) est sensiblement stable.

11. Dispositif informatique (100) selon l'une quelconque des revendications 1 à 10, servant en outre à corriger le point de regard (132) d'un décalage de point de regard déterminé sur la base d'entrées tactiles précédentes reçues par l'écran tactile (110).

12. Dispositif informatique (100) selon l'une quelconque des revendications 1 à 11, servant en outre à :
détecter une première entrée tactile sur l'écran tactile (110),
détecter une seconde entrée tactile sur l'écran tactile (110), la seconde entrée tactile correspondant à un actionnement d'un élément UI (301-304) affiché par l'utilisateur (130), et
si la seconde entrée tactile est détectée dans un intervalle de temps seuil à partir de la première entrée tactile, et qu'une position (135) de la seconde entrée tactile se trouve à une distance seuil à partir d'une position (134) de la première entrée tactile, commander l'écran tactile (110) pour qu'il affiche l'élément UI (304) actionné à la première position (134).

13. Procédé (500) de commande d'un écran tactile haptique (110), le procédé étant mis en œuvre par un dispositif informatique (100) et comprenant :
l'affichage (502) d'une pluralité d'éléments d'interface utilisateur, UI, (301-304) sur l'écran tactile (110),
l'acquisition (503) d'informations relatives à un point de regard (132) d'un utilisateur (130) regardant l'écran tactile (110) à partir d'un détecteur de regard (120), le procédé étant **caractérisé en ce qu'**il comprend en outre :
en réponse à une séquence de : détection que l'utilisateur (130) regarde l'écran tactile (110), détection qu'un objet (133) s'approche de l'écran tactile (110) et détection que l'utilisateur (130) cesse de regarder l'écran tactile (130) :
la sélection (506) d'au moins l'un des éléments UI (301-304) affichés en fonction du point de regard (132), et
la commande (509) de l'écran tactile (110) pour qu'il rende les éléments UI sélectionnés haptiquement différenciables des autres éléments UI.

14. Programme informatique (213) comprenant des instructions qui, lorsque le programme (213) est exécuté par un dispositif informatique (100), amènent le dispositif informatique (100) à mettre en œuvre le procédé selon la revendication 13.

15. Support de données lisible par ordinateur (212), sur lequel est stocké le programme informatique (213) selon la revendication 14.
